Europäisches Patentamt

European Patent Office

Office européen des brevets

(11) Publication number: **0 348 669**
**A1**

## EUROPEAN PATENT APPLICATION

(21) Application number: **89109398.1**

(22) Date of filing: **24.05.89**

(51) Int. Cl.⁴ **G02B 5/128**

(30) Priority: 27.05.88 JP 70620/88 U

(43) Date of publication of application:
**03.01.90 Bulletin 90/01**

(84) Designated Contracting States:
**BE DE ES FR GB IT NL**

(71) Applicant: **YOSHIDA KOGYO K.K.**
**No. 1 Kanda Izumi-cho Chiyoda-ku**
**Tokyo(JP)**

(72) Inventor: **Suzuki, Tsuneo**
**3333, Mikkaichi**
**Kurobe-shi Toyama-ken(JP)**
Inventor: **Matsushima, Hideyuki**
**369, Kubota Asahimachi Shimoniikawa-gun**
**Toyama-ken(JP)**

(74) Representative: **Patentanwälte Leinweber &**
**Zimmermann**
**Rosental 7/II Aufg.**
**D-8000 München 2(DE)**

(54) **Light retroreflective device.**

(57) A retroreflective device (10) is disclosed for use on personal effects to protect the user from hazardous situations by emission of reflected light beam in a flickered pattern contrastive to a concentrated intense beam which would dazzle and endanger the viewer, for example a vehicle driver. The device (10) comprises a layered structure of a substrate (11), a reflective layer (12), a colored indicium layer (13), a transparent lens-backed layer (14), a multiplicity of glass beads (15) embedded therein and a transparent cover layer (16) deposited in this order. The colored indicium layer (13) has a color distinctive from that of the reflective layer (12) to provide light retroreflection of varying intensities in flickered state.

EP 0 348 669 A1

# FIG.1

# LIGHT RETROREFLECTIVE DEVICE

This invention relates to a light retroreflective device suitable for use on personal effects so as to make the presence of the user readily recognized in dark environments and thus to protect him against for instance traffic accidents.

Retroreflective devices currently in commercial use are designed for application to ornaments, workers uniforms, clothing, umbrella, buttons, slide fasteners, and various other personal effects such that the user of the device can be readily spotted at night and thus protected from getting involved in traffic accidents and other hazardous situations. Most of the known retroreflective devices comprise a substrate in the form of a tape to which is applied by deposition, plating or coating a light reflective layer of aluminum, silver, copper or the like. Over the reflective layer is disposed a transparent adhesive layer which is in turn embedded partially with a multiplicity of glass beads and then covered with a transparent material. A retroreflective tape of such construction has an angle of incidence substantially parallel with an angle of reflection and hence can kick back a strong light beam on reflection of the head-light of a vehicle, urging immediate attention of the driver.

While the prior art retroreflective device are highly satisfactory in so far as concerns light retroreflective performance, they have a drawback in that reflected light beam is so sharp and intense as to dazzle or otherwise make the vehicle driver visually bewildered, leading to the possibility of his accident-inducive behaviour.

With the foregoing drawback of the prior art in view, the present invention seeks to provide an improved light retroreflective device which will upon incidence of light provide retroreflective because of varying intensities in a flickered pattern rather than in concentrated intense form such that a beam recipient, for example a vehicle driver, can be more readily and conspicuously led to visual attention without getting dazzled or otherwise visually bewildered.

The above object of the invention is achieved by the unique construction of a retroreflective device which comprises a substrate, a reflective layer attached thereto and carrying a colored indicium, a transparent lens-backed layer overlying the reflective layer and having glass beads partially embedded therein, and a transparent cover layer. The presence of colored indicia in the form of letters, designs, pictures, symbols and the like in the reflective layer serves to provide, in addition to controlled retroreflective, an aesthetic commercial value in daylight service of the present device.

The above and other objects and features of the present invention will become more apparent from reading the following detailed description of a preferred embodiment taken in conjunction with the accompanying drawings.

Figure 1 is a plan view of a pull tab for a slide fastener to which is applied a light retroreflective device embodying the invention and having a colored bird picture;

Figure 2 is a cross-sectional view taken on the line II - II of Figure 1; and

Figure 3 is a plan view of another pull tab having a retroreflective device with a star-like design in color.

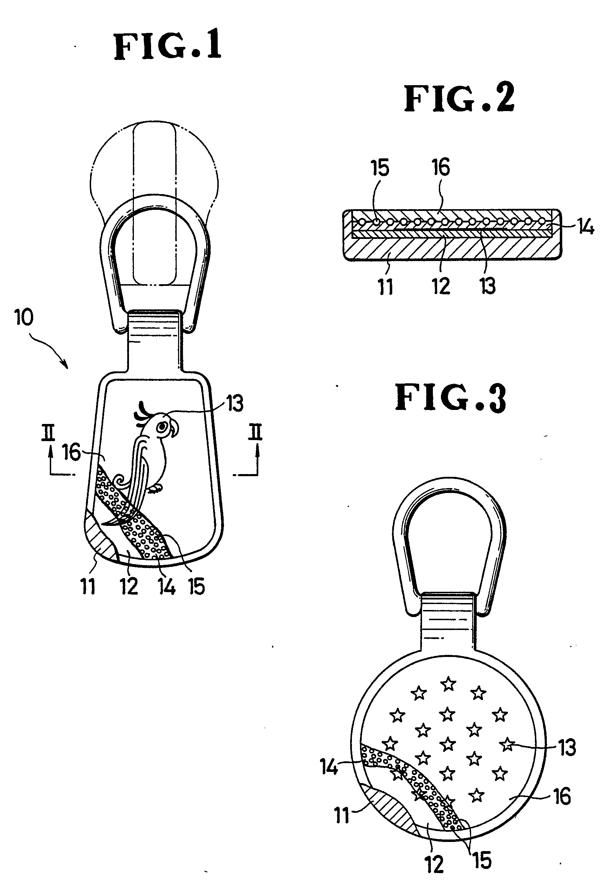

Referring to Figure 1, there is shown a retroreflective device generally designated by numeral 10 which is applied onto a substrate exemplarily in the form of a pull tab 11 well known for its function to pull a slider back and forth to open and close a slide fastener not shown.

The retroreflective device 10 according to the invention substantially comprises, as better shown in Figure 2, a light reflective layer 12, a colored indicium layer 13, a transparent lens-backed layer 14, a multiplicity of glass beads 15 partially embedded in the layer 14 and a transparent cover layer 16 superposed in this order. The retroreflective device 10 of this layered construction may be formed optionally by printing, plating, coating or vacuum deposition techniques.

In the case of printing, the light reflective layer 12 in the form of an aluminum or titanium white paste is deposited on the substrate 11 and then applied thereover by printing with a suitable indicium such as shown in Figures 1 and 3 which has a color distinctive from the colour of the reflective layer 12. In applying such indicium layer 13 to the reflective layer 12, a highly adhesive epoxy type ink would be preferably used to ensure a firm bond between the two layers. The lens-backed layer 14 is formed by a transparent resin such as acryl, melamine, urethane and epoxy resins and deposited in molten state by printing over the reflective layer 12 and over the colored indicium layer 13. The layer 14 serves as a binder to bond the glass beads 15 to the reflective layer 12. As and when the lens-backed layer 14 begins to somewhat harden, a multiplicity of glass beads 15 are distributed over the layer 14 and let by own gravity sink partially into the layer 14, in which instance care must be taken so as not to allow the individual beads 15 to become superimposed one over another. Before the lens-backed layer 14 is completely hardened, the cover layer 16 is applied thereover by printing, the material of the layer 16 being similar to the material for the transparent lens-backed layer 14.

Alternatively, the substrate 11 may be plated with tin or metallically coated to form the reflective layer 12, followed by imagining with the colored indicium layer 13. The lens-backed layer 14 is then coated initially to a thickness slightly smaller than a final desired thickness, and as this initial layer becomes about 70% dry, a similar material is further coated to the final thickness. While this layered material is still wet, the glass beads 15 are applied in a manner described in connection with the printing procedure. The cover layer 16 is finally coated to a thickness required to fully mask the glass beads 15.

Further alternatively, room-temperature vacuum deposition techniques may be used in forming the device 10, in which instance the substrate 11 is undercoated and then deposited with aluminum or tin to form the cover layer 16, the rest of the procedure being the same as already described.

## Claims

1. A light retroreflective device (10) which comprises a substrate (11), a light reflective layer (12) bonded thereto, a colored indicium layer (13) applied to said reflective layer (12) and having a color distinctive from that of the latter, a transparent lens-backed layer (14) deposited over said reflective layer (12) and said indicium layer (13), a multiplicity of glass beads (15) distributed without being mutually superimposed and partially embedded in said lens-backed layer (14), and a transparent cover layer (16) applied to a thickness required to fully mask said glass beads (15).

2. A retroreflective device (10) according to claim 1 which is formed by printing, plating, coating or vacuum deposition.

3. A retroreflective device (10) according to claim 1 wherein said reflective layer (13) is formed with aluminum or titanium white paste.

4. A retroreflective device (10) according to claim 1 wherein said lens-backed layer (14) and said cover layer (16) are formed with a transparent resin selected from the group of acryl, melamine, urethane and epoxy resins.

EP 0 348 669 A1

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 154 872 (NORDGREN)<br>* Column 4, lines 58-73; claims 1,2; figure 1 * | 1-4 | G 02 B 5/128 |
| X | US-A-2 143 946 (HUNTER)<br>* Page 1, column 1, lines 4-9; page 3, column 2, lines 55-65; figure 7 * | 1 | |
| A | | 2-4 | |
| A | GB-A-1 470 286 (SEIBU POLYMER KASEI K.K.)<br>* Page 1, lines 33-45; claim 3; figure 1 * | 1,2,4 | |
| A | US-A-3 164 645 (DE VRIES AND RILEY)<br>* Column 1, lines 14-21; column 2, lines 33-39,51-57; figure 2 * | 1,2,4 | |
| A | PATENT ABSTRACTS OF JAPAN, vol. 10, no. 80 (P-441)[2137], 29th March 1986; & JP-A-60 217 302 (YUNICHIKA SUPAAKURAITO K.K.) 30-10-1985<br>* Abstract * | 1,2 | |
| A | CH-A- 270 579 (MINNESOTA MINING & MANUFACTURING CO.)<br>* Page 1, lines 1-12; page 2, lines 28-41; figure 1 * | 1 | TECHNICAL FIELDS SEARCHED (Int. Cl.4)<br><br>G 02 B<br>G 09 F |
| A | FR-A-2 169 619 (MINNESOTA MINING & MANUFACTURING CO.)<br>* Page 7, line 31 - page 8, line 3; figure 5 * | 1 | |

The present search report has been drawn up for all claims

| Place of search | Date of completion of the search | Examiner |
|---|---|---|
| THE HAGUE | 09-10-1989 | BARBER S.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)